Europäisches Patentamt

European Patent Office

Office européen des brevets

(11) Publication number: **0 068 404**
**B1**

## (12) EUROPEAN PATENT SPECIFICATION

(45) Date of publication of patent specification: **02.10.85**

(51) Int. Cl.⁴: **G 01 N 15/00, G 01 N 21/64**

(21) Application number: **82105454.1**

(22) Date of filing: **22.06.82**

(54) **Analyzer for simultaneously determining volume and light emission characteristics of particles.**

(30) Priority: **24.06.81 US 276738**

(43) Date of publication of application:
**05.01.83 Bulletin 83/01**

(45) Publication of the grant of the patent:
**02.10.85 Bulletin 85/40**

(84) Designated Contracting States:
**DE FR GB**

(56) References cited:
**DE-A-2 261 695**
**DE-A-2 853 703**
**GB-A-1 281 819**
**US-A-3 738 759**
**US-A-3 871 770**
**US-A-4 198 160**

(73) Proprietor: **Becton, Dickinson and Company**
**Mack Centre Drive**
**Paramus New Jersey 07652 (US)**

(72) Inventor: **Fulwyler, Mack J.**
**874 Trenton Dr.**
**Sunnyvale, California 94087 (US)**
Inventor: **Unterleitner, Fred C.**
**3732 Grove Avenue**
**Palo Alto, California 94303 (US)**

(74) Representative: **von Kreisler, Alek, Dipl.-Chem.**
**et al**
**Deichmannhaus am Hauptbahnhof**
**D-5000 Köln 1 (DE)**

Courier Press, Leamington Spa, England.

## Background of the Invention

### 1. Field of the invention

The present invention relates to an apparatus for simultaneously analyzing at least two characteristics of particles flowing in a stream of liquid, and more particularly, concerns an apparatus for the simultaneous determination of volume and light emission characteristics of such particles.

### 2. Description of the Prior Art.

Flow analysis of particles has been employed in the determination of multiple characteristics of individual particles. This analysis is most useful in analyzing characteristics of cells for the collection of information which would be useful in areas of research, hematology, immunology and the like. The researcher is interested in determining specific characteristics of individual cells so that such cells may be classified, identified, quantified and perhaps sorted for further investigations or analysis. Although other cell characteristics may be determined by electronic means in flow analysis devices, two significant characteristics are cell volume and fluorescence.

Measurement of cell volume by the well known Coulter principle provides volumetric distribution information with respect to those cells. For instance, a comparison of cell volume determined during an experiment with cells of known volumes may assist the researcher in classifying the experimental cells. Inasmuch as electronic cell volume measurements have been relied upon for some period of time, many researchers have accumulated significant cell volume information for comparison and analysis purposes. Therefore, cell volume remains as one of the cell characteristics which offers the researcher significant meaningful data.

Similarly, and particularly with respect to cells, fluorescence is a characteristic which contributes to the identification, classification and further analysis of cells. In well known staining techniques, use of a typical biological fluorochrome conjugated with antigen or antibody, will bind the stain to certain cells. When the fluorochrome is excited, it will re-radiate or fluoresce in other regions of the color spectrum. By using a proper optical system, each cell which has the affinity to the fluorescent tagging stain can be detected due to the fluorescence which it emits after being excited. Therefore, fluorescence is also significant characteristic in the analysis of individual particles, and cells in particular.

In determining multiple characteristics of particles in a flow analysis system, it is desirable to acquire multiple measurements relating to those characteristics for each cell simultaneously. By measuring multiple characteristics simultaneously, the electronic components of the system can be simplified. Specifically, with measurements being taken at substantially the same time, various delay circuits and storage of information for later use in the electronic analysis can be eliminated. Furthermore, it is possible to increase the particle analysis rate when simultaneous measurements of the desired parameters can be accomplished.

The prior art teaches a number of different systems for measuring characteristics of particles in a moving stream.

U.S. Patent No. 3 710 933, corresponding to DE—A—2 261 695, discloses an apparatus which measures cell volume through a Coulter-type orifice, and then measures scatter (relating to size) and fluorescence. However, these measurements are not made simultaneously since there is a time gap between the electronic cell volume measurement and the optical measurements relating to scatter and fluorescence.

In U.S. Patent No. 3 738 759, an epi-illuminating system measures characteristics of particles flowing in a dispersion. The flow of particles in the measuring zone is parallel to the optical axis. A wash-stream is provided to wash the dispersion away from the measuring zone. Characteristics of particles relating to light emitted or reflected by the particles in the measuring zone are then analyzed. There is no provision for measuring cell volume in this invention.

Nearly simultaneous measurement of fluorescence and cell volume is described in U.S. Patent No. 4 198 160. The flow of particles in this invention is parallel to the optical axis, and the liquid flow is then diverted at right angles to its flow direction through the measuring orifice. Measurement of fluorescence is made by directing light coaxially with the measuring orifice along the path of flow of the particles.

U.S. Patent No. 4 110 604 describes a particle density measuring system in which particles flowing in a stream are enveloped in a sheath fluid which focuses and confines the sample fluid (with particles) to the center of the flowing stream.

In an article entitled "A Proposal for an Automatic Multiparameter Analyzer for Cells (AMAC)", by Robert C. Leif, found in *Automated Cell Identification and Cell Sorting*, edited by George L. Wied, Academic Press, New York 1970, pages 131—159, the author discloses a multiparameter analyzer for cells in which cell volume and optical characteristics are analyzed. The author suggests episcopic illumination for the light measuring technique.

In Thomas, R. A., et al. "Combined Optical and Electronic Analysis of Cells With the AMAC Transducers", The Journal of Histochemistry and Cytochemistry, Volume 25, No. 7, pages 827—835, 1977, the authors describe a combined optical and electronic analysis system using an orifice with sensing electrodes at each end. The system is said to be capable of measuring fluorescence, light scattering, and electronic cell volume simultaneously. The stream of particles is directed perpendicularly to the optical axis so that it intercepts a laser beam in the focal plane of the lens. Also, a long-working distance objective with a numerical aperture of 0,60 is used to gather the fluorescence emission.

DE—A—2 853 703 discloses a cuvette for electrooptical measuring of particles suspended in a liquid. In this cuvette, the upper limiting face is a plane toward which the bottom area of the cuvette is curved. It is seen that it is a disadvantage of the cuvette disclosed in this document that no uniform flow of the liquid passing the cuvette is achieved.

US—A—3 871 770 describes a method and apparatus for hydrodynamic focusing a liquid containing particles, such as blood cells, in a spiral fashion. The particles are passed through a narrow defined geometric path and monitored by the use of various principles.

Although the prior art patents and literature describe various techniques for measuring cell volume and fluorescence, including the simultaneous measurement, a practical, usable and commercial technique for such simultaneous measurement is still being sought. It is to the solution of the need for a practical, feasible apparatus for simultaneously analyzing particle volume and light emission, such as fluorescence, that the present invention is directed.

### Summary of the Invention

The apparatus of the present invention determines volume and fluorescence characteristics of particles flowing in a moving liquid stream of the type having a transparent liquid flow chamber including a passageway with an inlet opening and an outlet opening and an orifice therebetween, said orifice having a smaller cross-sectional dimension than said inlet and outlet openings, means for providing a bi-component stream of liquid flow into said inlet opening and through said orifice, said stream having a particle-free outer sheath liquid capable of carrying an electrical current and a coaxially arranged inner liquid containing particles adapted to fluoresce in a preselected region of the color spectrum when excited, electrode means for generating an electrical current in said liquid stream and for sensing the electrical variations as particles flow through said orifice, said electrical variations being related to variations in volume of particles, and an excitation light source.

The apparatus of the present invention is characterized by said passageway being tapered from said inlet opening and said outlet opening respectively toward said orifice, an epi-illuminating lens means for directing excitation light to said particles orthogonally to the direction of liquid flow through said orifice and for receiving fluorescence emitted by particles passing through said orifice, and means for simultaneously analyzing said electrical change and said fluorescence associated with each particle as it passes through said orifice to simultaneously determine particle volume and fluorescence characteristics thereof.

In a preferred embodiment of the present invention, the apparatus determines volume and fluorescence characteristics of particles flowing in a moving liquid stream. Included in this preferred apparatus is a transparent liquid flow chamber including a passageway with an inlet opening and an outlet opening with an orifice therebetween. The orifice has a smaller cross-sectional dimension than the inlet and outlet openings. A bicomponent stream of liquid flow is provided into the inlet opening and through the orifice. This bicomponent stream has a particle-free outer sheath liquid capable of carrying an electrical current and a coaxially arranged inner liquid containing particles adapted to fluoresce in a preselected region of the color spectrum when excited. Electrode means is provided for generating an electric current in the liquid stream and for sensing the electrical variations as particles flow through the orifice. These electrical variations are related to variations in volume of the particles. An excitation light source directs light toward the fluorescence-capable particles. An epi-illuminating lens means is included for directing the excitation light to the particles orthogonally to the direction of liquid flow through the orifice and for receiving fluorescence emitted by particles passing through the orifice. Means for simultaneously analyzing the electrical and the fluorescence signals associated with each particle as it passes through the orifice is included to determine cell volume and fluorescence characteristics thereof.

In accordance with the principles of the present invention, a number of advantages and objectives are attained. Primarily, the present invention permits the simultaneous analysis and determination of particle volume and light emission of particles, including cells, on an individualized basis. By using this simultaneous measurement, the electrical components employed to gather and display the results of the measurements can be simplified. No time delay circuits or significant accumulation of data on a time-deferred basis are required since the determination of particle volume and fluorescence is performed simultaneously. Inasmuch as no time delay is required, the simultaneous measurement as described herein allows the apparatus to perform the analysis of particles at a higher rate. In addition, in the preferred embodiments to be described hereinafter, incoherent light sources such as mercury arc lamps may be utilized, as well as coherent light derived from such sources as lasers. Moreover, an embodiment of the present invention desirably allows the liquid flow chamber to be removed from the analyzer apparatus when particles of different volume are expected to be analyzed. It is expected that the apparatus of the present invention can be neatly packaged with minimal bench space required. Use and operation of the apparatus is practical and straightforward while yet providing the advantages and objectives as described above.

### Brief Description of the Drawings

Fig. 1 is a perspective view of the preferred embodiment of an analyzer for simultaneously determining volume and light emmission characteristics of particles particularly illustrating the liquid sampling console;

Fig. 2 is an enlarged cross-sectional view of the preferred flow manifold assembly of the present invention taken along line 2—2 of Fig. 1., and also illustrating the preferred condenser lens assembly employed in the optical arrangement of the present invention;

Fig. 3 is a schematic illustration of the liquid flow paths and particle volume measuring components of the analyzer of Fig. 1;

Fig. 4 is an enlarged cross-sectional view of the preferred flow chamber employed in the analyzer of the present invention;

Fig. 5 is a schematic illustration of the optical elements and light paths particularly for determining fluorescence characteristics of particles flowing through the flow chamber; and

Fig. 6 is an enlarged cross-sectional view of the flow chamber marked as detail A in Fig. 2 illustrating the simultaneous determination of particle volume and fluorescence of particles passing through the flow chamber.

Detailed Description

While this invention is satisfied by embodiments in many different forms, there is shown in the drawings and will herein be described in detail a preferred embodiment of the invention, with the understanding that the present disclosure is to be considered as exemplary of the principles of the invention and is not intended to limit the invention to the embodiment illustrated. The scope of the invention will be measured by the appended claims.

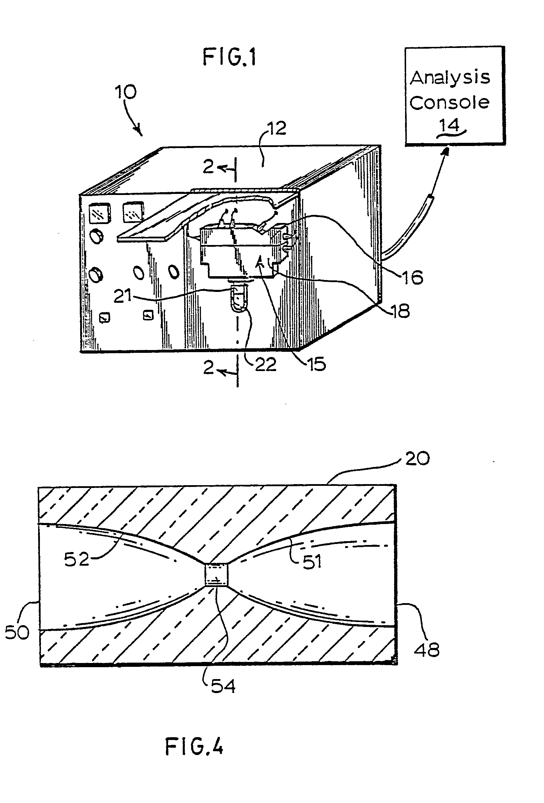

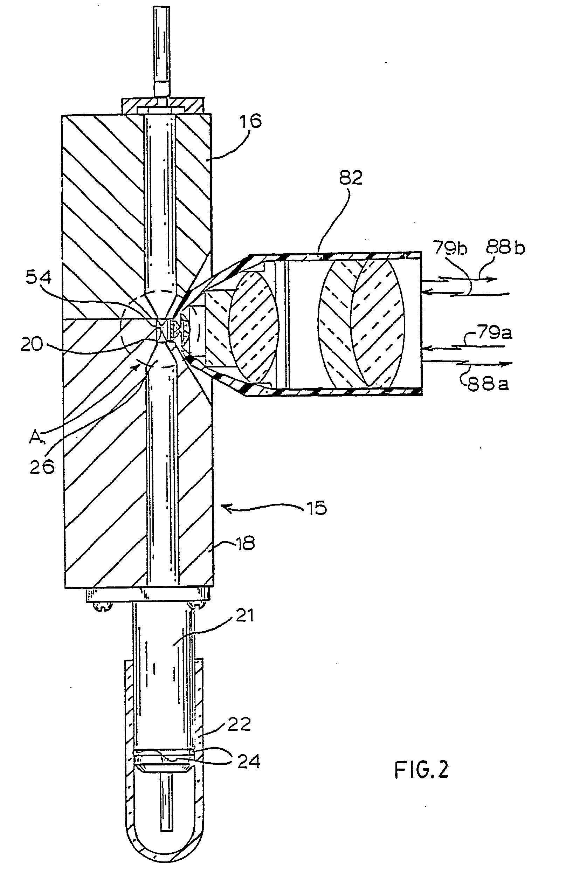

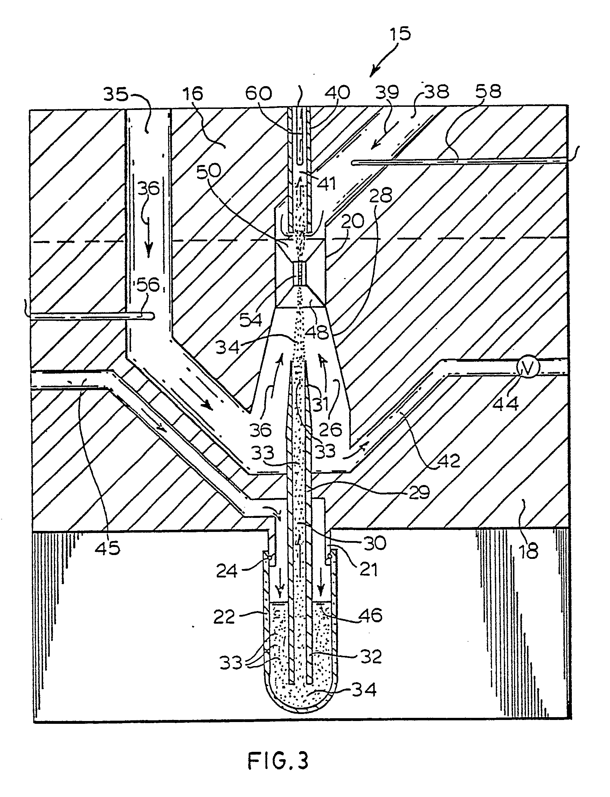

Advertising to the drawings, and Figs. 1 and 2 in particular, there is illustrated the preferred analyzer 10 of the present invention for simultaneously determining volume and light emission characteristics of particles, fluorescence being the preferred light emission characteristic to be analyzed. In particular, analyzer 10 includes a liquid sampling console 12 which is constructed to contain both the particle volume and fluorescence measuring components, as hereinafter described, but which is separate from the analysis console 14. It will be pointed out hereinafter that analysis console 14 includes the electrical components, display screens and other data information regarding the control and function of the analyzer herein. The liquid sampling console as seen in Fig. 1 includes a flow manifold assembly 15 which is designed to provide a stream of flowing liquid containing the particle to be analyzed. Flow manifold assembly 15 is preferably fabricated in two parts, an upper portion 16 and a lower portion 18. These portions are separable so that a liquid flow chamber 20 may be inserted and removed, for interchangeability, within the flow paths inside the flow manifold assembly. A sample injection manifold 21 in the embodiment being described depends downwardly so that a container 22 carrying the particles to be analyzed may be inserted thereon. An O-ring 24 is included on sample injection manifold 21 to assure a liquid-tight fit between the injection manifold and the container. The details of flow manifold assembly 15 will be better understood by referring now to Fig. 3 which is a schematic representation of the components and function of the flow manifold assembly.

As seen in Fig. 3, flow manifold assembly 15 includes a main flow cavity 26 which is normally substantially larger in diameter than flow chamber 20. To facilitate smooth, laminar flow the main flow cavity includes a tapered segment 28 converging toward flow chamber 20. Depending into main flow cavity 26 is a sample tube 29 with a lumen 30 extending therethrough. Tube 29 also includes a tapered segment 31 which tapers toward flow chamber 20. In order to provide proper flow and avoid mixing of the sampling liquid and sheath liquid, tapered segment 31 is positioned inside the main flow cavity to leave a short space between its end and flow chamber 20. The opposite end 32 of the sample tube extends beyond injection manifold 21 so that it will be submerged inside sampling liquid 34 within container 22. The sampling liquid includes particles 33 dispersed throughout which are to be analyzed. As previously mentioned, O-ring 24 provides a fluid-tight seal between sample injection manifold 21 and liquid container 22.

A channel 35 communicates with main flow cavity 26. Liquid is delivered to the mainflow cavity through channel 35 to serve as an outer sheath for particles flowing in the liquid stream. An appropriate liquid connection is made between the entry of channel 35 and the liquid sampling console when the flow manifold assembly is mounted therein. The sheath liquid 36 is generally pressurized, for example at 6.18 k Pa (25 in. (63 cm) $H_2O$), and typically flows through channel 35 at a rate of 1—2 ml. per minute. Sheath liquid 36 should be substantially particle free so that it does not interfere with the analysis of particles 33 from sampling liquid 34; also, sheath liquid 36 should be capable of carrying an electrical current so that a potential can be applied across the orifice of the flow chamber, as will hereinafter be described. A saline solution is desirably utilized as the sheath liquid.

On the side of the flow chamber 20 opposite from main flow cavity 26, another channel 38 is provided in flow manifold assembly 15. Channel 38 is in fluid communication with the outlet end of flow chamber 20. A secondary sheath liquid 39 flows through channel 38 normally at a slightly lower pressure than the flow of sheath liquid 36 in channel 35. Once again, a saline solution is desirably employed as secondary sheath liquid 39. A waste tube 40 is positioned inside the flow manifold assembly so that it is in fluid communication with channel 39 and so that its interior end is adjacent the outlet end of flow chamber 20. A lumen 41 extends completely through waste tube 40.

A drain channel 42 communicates with main flow cavity 26 and includes a valve 44 which is normally closed during the main flow of liquid through the manifold assembly. Drain channel 42 is provided to drain liquid from the manifold assembly after the flow operations have been completed, and also allows a reverse flow of liquid through flow chamber 20 and main cavity 26 in order to dislodge any particles or other impediments which may be causing a blockage therein. To this end, sheath liquid flow inside the manifold assembly is terminated, and valve 44 opened to drain the liquid contents from the assembly. Air may then be injected through the assembly from channel 38 while valve 44 is opened. This helps clean the system while purging it of particulate matter which may be undesirable.

Another flow channel 45 extends through flow manifold assembly 15 and terminates in an opening 46 in sample injection manifold 21 alongside sample tube 29. When container 22 with particles 33 and sampling liquid 34 therein is connected to the sample injection manifold, pressurized air, from a source in liquid sampling console 12, is delivered through channel 45. Normally, the air is delivered through channel 45 at a slightly higher pressure than that of sheath liquid 36. Under this air pressure, sampling liquid 34 is driven through lumen 30 of the sample tube upwardly (in the embodiment being described, and as seen in Fig. 3) toward main flow cavity 26. As sampling liquid 34 exits tapered end 31 of the sampling tube, there is a confluence between the sampling liquid and the sheath liquid. A coaxial, bi-component liquid stream is formed, preferably at velocities in the laminar flow region. It can be seen that the sampling liquid containing the particles to be analyzed forms the inner component of the flowing liquid stream. By the time the stream of liquid enters flow chamber 20, there is substantial equilibration in the velocities of the sheath liquid and the sampling liquid. Moreover, particles 33 in the inner sampling liquid flow in the center of the liquid stream, are maintained away from the walls of the orifice as pointed out hereinafter. Thus, this flow arrangement minimizes the possibilities of particles contacting the walls of the flow chamber. It is appreciated that the various pressures and flow rates can be adjusted by controls on the liquid sampling console. A typical sample flow rate is in the range of 5—50 microliters per minute of sampling liquid through the sampling tube. Furthermore, the air pressure in channel 45 can be adjusted to control the count rate of particles through the flow chamber. Typically, the count rate would range between 100 and 1000 particles per second flowing through the flow chamber. The design of main flow cavity 26 and the positioning of sample tube 29 therein is intended to offer minimal flow resistance to the bi-component stream of liquid as it flows toward flow chamber 20.

Referring now to Fig. 4, taken in conjunction particularly with Fig. 3, the preferred embodiment of flow chamber 20 is illustrated. It can be seen that flow chamber 20 is preferably cylindrically shaped with a passageway extending therethrough. There is an inlet opening 48 and an outlet opening 50 on opposite ends of the flow chamber. A smooth tapering recess 51 communicating with inlet opening 48 extends inwardly inside flow chamber 20; on the other side of the flow chamber, a smooth tapering recess 52 communicating with outlet opening 50 extends inwardly inside the flow chamber. Interconnecting recesses 51 and 52 to establish a liquid flow path is a small diameter orifice 54. This orifice is preferably concentrically positioned within the flow chamber so that it lies on the longitudinal axis thereof. Orifice 54 has a circular cross-section and has a short cylindrical length running parallel to the longitudinal axis of flow chamber 20. It is understood, however, that the longitudinal length of orifice 54 may vary according to many factors for analyzing particles, and that the cross-sectional shape of the orifice may take on geometrical configurations other than circular. Also, while recesses 51 and 52 are depicted as preferably smooth, curving surfaces tapering inwardly toward orifice 54, other configurations may be utilized, for example, a straight taper from the wider inlet and outlet openings toward the smaller diameter orifice inside the flow chamber. For illustrative purposes only, a typical flow chamber might have an outside diameter of approximately 4 mm and an orifice diameter ranging from 0,05—0,15 mm. The length of the orifice in the longitudinal direction might be 0,102 mm, whereas the overall length of the flow chamber might be 4,70 mm. It can therefore be seen that some resistance to the flow of liquid through flow chamber 20 will develop as the flowing liquid passes through orifice 54.

The configuration of the flow chamber thus permits the utilization of the well known Coulter principle. According to this principle, when a non-conductive particle passes through an orifice containing an electrically conductive medium, there will be an increase in the electrical resistance at the orifice. By applying an electrical potential to the orifice it is possible to measure the resistance increase as an electrical pulse. A proportional correlation has been established between the volume of the particle passing through the orifice and the amplitude of the electrical pulse measured as that particle traverses the orifice. In order to apply the potential across the orifice, a negative electrode 56 is positioned in fluid channel 35 so that sheath liquid 36 contacts electrode 56. On the other side of flow chamber 20, a positive electrode 58 is positioned within channel 38 so that secondary sheath liquid 39 therein contacts the positive electrode. By passing an electrical current through the electrodes a potential is established across orifice 54. In the embodiment being described, a third electrode 60 is positioned in lumen 41 of waste tube 40. Electrode 60 serves as a sensing electrode wherein the instantaneous voltage on the sensing electrode is proportional to the resistance change measured across the orifice as each particle passes thereby. Sensing electrode 60 measures the potential at the end of waste tube 40. No electrical current flows in waste tube 40 and the particles therein no longer are affected by the electrical field. Actually, sensing electrode 60 measures the resistance between the orifice and the negative electrode. Accordingly, even though a separate sensing electrode 60 is provided it is not necessary for this invention inasmuch as sensing electrode 60 could also serve as the positive electrode in setting up the electrical field across the orifice of the flow chamber. While the electrodes establish an electrical potential across the orifice, it is preferable to locate the electrodes out of the region of the flow chamber to assure that any bubbles generated at the electrodes are kept away from the orifice.

Returning now to Fig. 3, the bi-component liquid stream flows from main flow cavity 26 through inlet opening 48 and through orifice 54 in a coaxial flow arrangement. As each particle 33 in the sampling liquid traverses orifice 54 the resistance at the orifice is changed. By measuring this change of resistance with respect to each particle, the volume of the particle can be determined. The pulse amplitude relating to resistance increase across the orifice can be displayed on analysis console 14 or other data collecting or displaying equipment. Furthermore, the information regarding particle volume may be stored in a computer for later analysis or retrieval. The electrical components employed to measure, display and store information with respect to particle volume are well known. One such system is described in U.S. Patent No. 4 110 604.

After flowing through flow chamber 20, the stream of liquid is collected in waste tube 40. The purpose of secondary sheath fluid 39 is to assure liquid flow directly into waste tube 40. By effectively moving the particles out of the sensing area into the waste tube, various eddy or swirling currents are eliminated which otherwise might cause false pulses in the sensing region. As in the entry end of flow chamber 20, the exit end, channel 38 and waste tube 40 are designed to provide smooth, laminar flow of the liquid from the sensing region as it is collected in the waste tube.

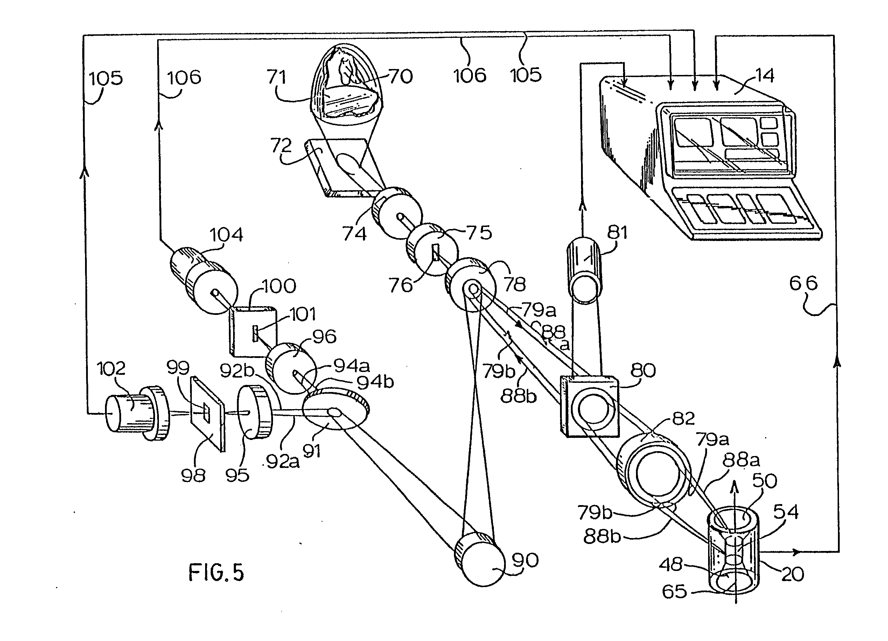

With this liquid flow arrangement as described above, the volume of particles passing through the orifice can be efficiently determined. At the same time that particle volume is being determined, the optical aspects of the present invention provide for the measurement of light emitting characteristics of those particles. Accordingly, as each particle passes through the orifice of the flow chamber, a simultaneous determination of volume and light emission can be analyzed. Fig. 5 represents a schematic illustration of the preferred optical components of the present invention which permits the simultaneous measurement of light emitting characteristics of the particles simultaneously with the measurement of particle volume.

For purposes of the ensuing discussion regarding the specific components of the embodiment being described herein, it will be assumed that some particles, if not all, in the sampling liquid will have an affinity for a light emitting tagging material. In the embodiment being described, the tagging material for the particles has fluorescent characteristics and for exemplary purposes the fluorescent material is subject to excitation in the blue/green region of the color spectrum whereas re-radiation or fluorescence occurs in the green/red region of the color spectrum. For illustrative purposes, the optical components will be described with respect to these exemplary color regions. It is appreciated, however, that different optical components may be employed in the present invention depending upon the tagging material utilized. For instance, the tagging material may become excited and fluoresce in different color regions; also, the tagging material may exhibit phosphorescence or other light emission instead of fluorescence. Turning to the schematic illustration of Fig. 5, particles to be analyzed are seen passing along flow line 65 through orifice 54.

As each particle passes through the orifice its volume is determined by means of the Coulter principle as previously described with the measurements being directed to analysis console 14 as illustrated along electrical flow line 66. Each particle is simultaneously analyzed for light emitting characteristics by the optical components of this invention.

Inasmuch as fluorescent tagging materials for the particles are commonly excited with ultraviolet light, the preferred excitation light source of the present invention is one which delivers incoherent light particularly in the ultraviolet range. Light source 70 is preferably a 100 watt mercury compact arc lamp. This mercury arc lamp emits a number of lines covering the ultraviolet through yellow color regions. It is understood that other incoherent light sources may also be utilized in the present invention. Furthermore, coherent light sources, such as lasers, may also be employed. Some of the filter elements to be described hereinafter may be eliminated when using a laser which generates light over a narrow wavelength and can be selected at the color of choice for exciting the fluorescent tagging material. For purposes of the present invention, however, a laser is not now preferred due generally to its excessive bulk, and special power and cooling water requirements, which the mercury arc lamp does not need.

Surrounding the mercury arc lamp 70 is an ellipsoidal reflector 71 which receives all the light from the lamp. The ellipsoidal reflector concentrates a larger solid angle of the light from the lamp. Although a lens could be employed for improving image quality, the ellipsoidal reflector is preferred because it is independent of wavelength whereas a lens would be wavelength dependent unless a multi-element lens system is used. Light is then transmitted from ellipsoidal reflector 71 to a cold mirror 72. The cold mirror is typically a glass structure with transparent thin films, alternating high and low refractive indices such that short wavelengths are reflected and long wavelengths are transmitted therethrough. These longer wavelengths, typically the red and infrared, are associated with heat. Therefore the transmission of these longer wavelengths eliminates some of the heating effects generated from the lamp. Although not illustrated, two or more cold mirrors could be employed to reduce long wavelength transmissions to about one percent and also to fold the optical path in the packaging of the optical components.

From the cold mirror the transmitted light from the lamp passes through a series of excitation filters 74. Depending upon the fluorescent tagging material on the particles, the band of wavelengths is selected to excite the fluorescent tagging material which is blue/green in the embodiment being described. The excitation filters discriminate against background fluorescence and block light at the wavelengths of the fluorescent tagging material since the mercury arc lamp will generally emit light in a broad spectrum covering the wavelengths of fluorescence expected from the particles. After passing through the excitation filters, the light transmitted from the lamp passes through a slit member 75. The slit member eliminates background excitation and helps focus and limit excitation to the area of orifice 54 inside flow chamber 20 where particles are being analyzed. It can be seen in Fig. 5 that slit member 75 includes a rectangularly shaped slit 76 which generally conforms to the rectangular cross-section of orifice in the plane orthogonal to the optical axis. It is preferred that slit member 75 be made of brass with slit 76 electrochemically etched therein. After passing through slit 76, the transmitted light is directed to an excitation beam splitter 78. Preferably, excitation beam splitter 78 is a dichroic filter. In the embodiment being described, the dichroic filter is an efficient transmitter of light in the wavelengths for delivering excitation energy to the particles; on the other hand, the dichroic filter is an efficient reflector of light emitted from the particles in the fluorescence color region. As an example, excitation beam splitter 78 will efficiently transmit blue/green light toward the particles for excitation thereof, while efficiently reflecting green/red light which is emitted from the particles after being excited. As seen in Fig. 5, the transmitted light path is designated by lines 79a—79b.

Light transmitted through excitation beam splitter 78 then travels to beam splitter 80. The beam splitter samples about four percent of light independent of wavelength. This four percent, or other small percentage, is then reflected to the excitation light monitor 81 which monitors the light passing through slit 76. Excitation light monitor 81 establishes a photocurrent proportional to light intensity. The output of excitation light monitor is directed to the electronics within analysis console 14. In essence, the excitation light monitor serves as a feed-forward compensation of fluorescence gain; for example, if the emission intensity through the slit decreases, the fluorescence intensity of the fluorescent tagging material on the particles will also decrease. In order to provide a modality of constancy during the measurement procedure, the excitation light monitor signals a sensor unit fluorescence preamplifier in the analysis console to proportionally increase the gain for the fluorescent pulses at the console if the original transmitted signal from the lamp has become weakened. Inasmuch as the lamp may drift with time, age, flicker or the like, the utilization of the excitation light monitor provides a mechanism to compensate for these abnormalities.

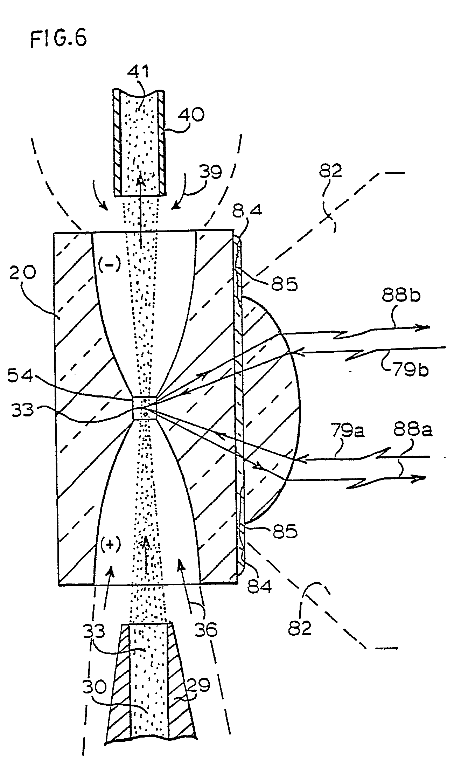

Most of the light from excitation beam splitter 78 passes through beam splitter 80 and enters condenser lens assembly 82. The purpose of condenser lens assembly 82 is to focus the excitation light onto orifice 54 in flow chamber 20. Figs. 2 and 6, taken in conjunction with Fig. 5, illustrate the optical flow paths of both excitation and fluorescence, as well as the light stream of particles 33 flowing through the flow chamber so that particle volume can be determined. Condenser lens assembly is preferably an epi-illuminating system which uses the same lens for imaging excitation light and for receiving fluorescence emission from the particles. As seen particularly in Fig. 6, the coaxial stream of liquid flowing into orifice 54 maintains the particles in the center of liquid flow so that they are not close to the wall surrounding the orifice where a distorted electrical signal due to non-uniform electric field distributtion may occur. With this centrally confined coaxial flow, the particles are confined to a very narrow region of uniform illumination. Therefore, condenser lens assembly 82 is preferably positioned so that the leading lens face 84 is positioned directly against the outside diameter of flow chamber 20. A thin layer of index matching medium, such as glycerol 85 is applied to the interface of lens and flow chamber to provide effective ultraviolet transmission while eliminating any intrinsic fluorescence effects. This layer of glycerol also allows the lens assembly to be moved slightly, if necessary, for finer adjustment and focus. To account for the distance between leading face 84 and the longitudinal axis of flow chamber 20 which passes through orifice 54, condenser lens assembly 82 requires a compatible working distance in order to focus properly on the centrally confined particles in the orifice. For exemplary purposes, the working distance of the embodiment being described is approximately 2,03 mm; however, by reducing the diameter of flow chamber 20 it may be possible to minimize the working distance to about 0,25 mm. Inasmuch as the normal working distance for typical high magnification microscopes is typically less than 0,25 mm the condenser lens assembly of the present invention has been designed to provide for the greater than normal working distance for this kind of lens arrangement. In addition, for maximum light collection from the particles, it is desirable to make the numerical aperture of the lens assembly as large as possible, while minimizing spherical aberration of the lens. For purposes of the present invention, it is preferable, although not necessary to utilize a numerical aperture greater than 1,0.

As seen by particularly referring to Fig. 2, the condenser lens assembly includes a plurality of lens elements which provide the afore-mentioned features. Furthermore, it is also preferred that the condenser lens assembly provide low loss transmission in wavelengths from 350 nanometers, in the near ultraviolet region, to 650 nanometers, in the visible red region. It is also desirable that the lens assembly provide a resolution of 0,1 micrometers or less blur circle at the object plane in order to provide reasonably sharp edges on a 50 micrometer slit. This resolution should be maintained over the afore-mentioned 350 nanometer to 650 nanometer spectral range. It is also preferred that low intrinsic fluorescence materials be incorporated in the fabrication of the condenser lens assembly. It is appreciated that the lens materials, size, curvatures and arrangements can be varied to provide the above-described features. Of course, inasmuch as the lens system is an epi-illuminating structure, the lens system is designed to account for the color corrections for the excitation and fluorescence ranges.

As seen particularly in Fig. 6, excitation light, designated by light paths 79a—79b, is transmitted through the wall of flow chamber 20. The flow chamber is thereby fabricated from a material which is transparent to the wavelengths of both excitation, fluorescence and other light reflection off the particle that is in the illuminated region. Furthermore, the material for the flow chamber should be electrically non-conductive and most desirably should exhibit a low native, intrinsic fluorescence to keep background fluorescence (noise) to a minimum. While there are a number of transparent materials which may be used, such as quartz, and different types of glass, it is preferred that the flow chamber is fabricated from fused silica. Therefore, excitation light is focused on each particle 33 as it passes through orifice 54. Those particles which have the affinity for the fluorescent tagging material will rapidly become excited when the excitation energy reaches those particles. Once excited, fluorescence occurs in a color region, such as green/red, which is different from the excitation color region of blue-green. This fluorescent particle will then emit fluorescence back through the wall of flow chamber 20 and into condenser lens assembly 82 along the optical flow paths, schematically designated as 88a—88b. Any fluorescence which the particles emit will occur in all directions, with perhaps thirty percent being collected by the condenser lens assembly.

Returning to Fig. 5, fluorescence or re-radiated light travels through condenser lens assembly 82 and through beam splitter 80. A small percentage of re-radiated light, such as four percent, is lost through beam splitter 80 due to the reflective characteristics thereof. The reflected re-radiated light is captured into a baffle (not shown) so that light noise is kept to a minimum. As the re-radiated light reaches excitation beam splitter 78 the reflective properties of this dichroic filter causes a reflection of light in the re-radiated wavelengths, such as the green/red region. So that the re-radiated light from the particles is efficiently and effectively captured, excitation beam splitter 78 is oriented in the packaged assembly so that it is angularly displaced along the optical axis of re-radiated light. While the angle of orientation of the excitation beam splitter may vary, it is preferred to maintain the excitation beam splitter as close as possible to being perpendicular to the optical axis of re-radiated light. Of course, the excitation beam splitter could not be truly perpendicular to the re-radiated optical axis since the light would be refected back into the condenser lens. On the other hand, with larger angles of orientation, such as between 30 and 45 degrees or larger, the sharpness of the transition from the transmitted to reflected light decreases; therefore, instead of capturing only light in the green/red region of the color spectrum, greater amounts of overlapping color regions will be reflected. This decreases the intensity of the desirable color region. With this in mind, excitation beam splitter is oriented so that it is angled preferably less than ten degrees from the plane perpendicular to the optical axis of re-radiation.

After being reflected by the dichroic parameters of the excitation beam splitter, the re-radiated light is directed to a spherical mirror 90. Spherical mirror 90 is preferably included to achromatically fold the optical path for packaging purposes; if there are no constraints on packaging the spherical mirror could be eliminated. In the embodiment being described, where compactness of the package is desirable, the spherical mirror will allow the excitation and blocking filters (hereinafter described) to be located physically close together so that one module may be packaged. In this fashion the entire filter module might be readily removed and interchanged when different fluorescent color tagging materials are used in analyzing particles.

From spherical mirror 90 the re-radiated light from the particles is directed to another dichroic mirror 91 in the embodiment being described. The purpose of dichroic mirror 91 is to separate two different colors traveling along the re-radiated light path so that they can be analyzed separately. It is understood that the inclusion of dichroic mirror 91 is merely a preferred embodiment inasmuch as the re-radiated light from spherical mirror 90 can be analyzed without being further separated. The inclusion of dichroic mirror 91 therefor demonstrates the flexibility of the present invention in providing analysis of the fluorescence in one or more color regions. Thus, dichroic mirror 91 would be selected to separate, for example, the green from the red regions of the color spectrum. Wavelengths in the red region would be reflected along optical path 92a—92b, while wavelengths of the green region would be transmitted through the dichroic mirror 91 along optical path 94a—94b.

The reflected red light 92a—92b passes to a barrier filter 95 which is designed to transmit wavelengths of only one color region, in this instance, red. Barrier filter 95 therefore is adapted to block wavelengths of the green region which may be reflected from dichroic mirror 91. Also, there may be some wavelengths from the blue, excitation region which have been bounced off the particles and is included in the re-radiated light. Barrier filter 95 is also designed to block this back scatter of blue light to thereby eliminate background noise which is clearly undesirable. Similarly, a barrier filter 96 is provided along green optical path 94a—94b. Barrier filter 96 is designed to allow wavelengths of the green region to pass through, while blocking extraneous red light which may be transmitted through dichroic mirror 91. Back scatter of blue light along this path is also blocked by barrier filter 96 thereby eliminating or minimizing background noise traveling along this path. It is also possible to provide for fluorescence compensation in the electronic circuitry at analysis console 14. If any of the fluorescence bands, either red or green, or other colors which may be used, tend to overlap, the electronics can be designed to substract a proportional signal which is due to the wrong color band which may be picked up in the fluorescence detector.

Slit members 98 and 100 are provided along the respective optical paths so that light passes through slits 99 and 101, respectively. Slits 99 and 101 are similar to slit 76 in slit member 75; the former slits permit the photodetector to "see" only the two-dimensional area of orifice 54 in flow chamber 20 where the excitation beam impinges on the stream of particles flowing therethrough. These slits therefore eliminate diffuse background light which the photodetector receives. Slits 99 and 101, for example, may be electrochemically etched holes in brass sheets.

Two fluorescence detectors 102 and 104 are provided to receive the two separated red and green light paths. These fluorescence detectors are conventional photomultipliers which convert optical signals into electrical signals. These electrical signals are then fed along electrical lines 105 and 106, respectively, to analysis console 14, where the electrical signals are processed by the electronics therein for analysis purposes. Various displays, information presentation, accumulation or recordation may be provided in the analysis console. The electrical components to provide analysis of the electrical signal relating to fluorescence may include state of the art technology and may vary according to the level of sophistication of the analysis and data presentation. One such electrical system for fluorescense determination is described in U.S. Patent No. 3 826 364.

Thus, the present invention provides an analyzer for simultaneously determining volume and light emitting characteristics of particles. By transmitting excitation light to and receiving re-radiated light from particles in a direction orthogonal to the particle flow direction, a convenient liquid handling technique can be employed. By use of a unique flow chamber along with unique optical elements, the analyzer of the present invention is capable of performing the simultaneous analysis of multiple parameters of particles flowing in an illuminated, electrically sensitive field.

**Claims**

1. An apparatus for the determination of volume and fluorescence characteristics of particles (33) flowing in a moving liquid stream of the type having a transparent liquid flow chamber (20) including a passageway with an inlet opening (48) and an outlet opening (50) and an orifice (54) therebetween, said orifice having a smaller cross-sectional dimension than said inlet and outlet openings, means (29, 35) for providing a bi-component stream of liquid flow into said inlet opening (48) and through said orifice (54); said stream having a particle-free outer sheath liquid (36) capable of carrying an electical current and a coaxially arranged inner liquid (34) containing particles (33) adapted to fluoresce in a pre-selected region of the color spectrum when excited, electrode means (56, 58) for generating an electrical current in said liquid stream and for sensing the electrical variations as particles (33) flow through said orifice (54), said electrical variations being related to variations in volume of particles (33), and an excitation light source (70), characterized by: said passageway being tapered from said inlet opening (48) and said outlet opening (50) respectively toward said orifice (54), an epi-illuminating lens means (82) for directing excitation light (79a, b) to said particles (33) orthogonally to the direction of liquid flow through said orifice (54) and for receiving fluorescence (80a, b) emitted by particles (33) passing through said orifice (54), and means (14) for simultaneously analyzing said electrical change and said fluorescence associated with each particle (33) as it passes through said orifice (54) to simultaneously determine particle volume and fluorescence characteristics thereof.

2. The analyzer of Claim 1 wherein said flow chamber (20) is cylindrically shaped with said orifice (54) being concentrically positioned therein.

3. The analyzer of Claim 2 wherein said orifice (54) has a circular cross-section.

4. The analyzer of Claim 1 wherein said flow chamber (20) is removable from said analyzer.

5. The analyzer of Claim 1 wherein said flow chamber (20) is made from a material selected from the group consisting of quartz, glass or fused silica.

6. The analyzer of Claim 2 wherein said lens means (82) is positioned directly adjacent said flow chamber (20) so that the excitation light path from said lens means (82) passes through said flow chamber (20) and orthogonally intersects said flowing stream of liquid in said orifice (54), the focal plane of said excitation light being located substantially on the longitudinal axis of said orifice (54).

7. The analyzer of Claim wherein said lens means (82) includes a lens arrangement to provide a high numerical aperture and a long working distance from the face of said lens means (82) to said focal plane.

8. The analyzer of Claim 7 wherein the numerical aperture of said lens means (82) is greater than 1,0 and the working distance is greater than 0,25 mm.

9. The analyzer of Claim 1 wherein said light source (70) provides incoherent light to said lens means (82).

10. The analyzer of Claim 9 wherein said light source (70) is a mercury arc lamp.

11. The analyzer of Claim 10 which further includes means (74) for filtering the light from said source (70) so that wavelengths of a pre-selected color region are transmitted therethrough for passage to said lens means (82), said pre-selected color region being the excitation light for fluorescence-capable particles (33).

12. The analyzer of Claim 11 wherein said light filtering means (74) is removable from said analyzer so that inter-changeable filtering means may be employed for excitation light and re-radiation light in different regions of the color spectrum.

13. The analyzer of Claim 1 wherein said light source (70) is a laser.

14. The analyzer of Claim 1 wherein said electrode means (56, 58) includes a positive (58) and a negative electrode (56), each positioned on opposite sides of said orifice (54) for generating a potential thereacross.

15. The analyzer of Claim 14 which further includes a sensing electrode (60) disposed out of the electric current field of said positive (58) and said negative electrodes (56) for sensing electrical signal changes across said orifice (54) as said particles (33) pass therethrough.

16. The apparatus of Claim 1 which further includes means for producing information relating to the simultaneous detection of electrical and light emission signals of each particle (33) passing through said orifice (54).

## Revendications

1. Appareil pour la détermination du volume et des caractéristiques de fluorescence de particules (33) s'écoulant dans un courant de liquide, du type ayant une chambre transparente d'écoulement de liquide (20) comportant un passage ayant une ouverture d'entrée (48) et une ouverture de sortie (50) et un orifice (54) entre les deux, cet orifice étant de plus petite section que les orifices d'entrée et de sortie, des moyens (29, 35) de production d'un courant de liquide à deux composants entrant dans l'ouverture d'entrée (48) et passant par l'orifice (54), ce courant comprenant un liquide extérieur formant gaine, sans particules (36) et capable de conduire un courant électrique, et un liquide intérieur disposé coaxialement (34) contenant des particules (33) faites pour entrer en fluorescence dans une région choisie du spectre chromatique quand elles sont excitées, un système d'électrodes (46, 58) pour la production d'un courant électrique dans le courant de liquide et la détection des variations de caractéristiques électriques quand les particules (33° passent dans l'orifice (54), ces variations électriques étant liées aux variations de volume des particules (33), et une source d'excitation lumineuse (70), caractérisé par:

— une diminution de la section du passage de l'ouverture d'entrée (48) et de l'ouverture de sortie (50) vers l'orifice (54),

— un ensemble de lentilles d'éclairage épiscopique (82) dirigeant la lumière d'excitation (79a, 79b) sur les particules (33) perpendiculairement à la direction de passage du liquide dans l'orifice (54) et recevant la fluorescence (88a, 88b) émise par les particules (33) passant dans l'orifice (54), et,

— des moyens (14) d'analyse simultanée du changement électrique et de la fluorescence associés à chaque particule (33) quand elle passe dans l'orifice (54), pour la détermination simultanée du volume et des caractéristiques de fluorescence de cette particule.

2. Analyseur selon la revendication 1, caractérisé par le fait que la chambre d'écoulement (20) est cylindrique et l'orifice (54) y est placé concentriquement.

3. Analyseur selon la revendication 2, caractérisé par le fait que l'orifice (54) est de section circulaire.

4. Analyseur selon la revendication 1, caractérisé par le fait que la chambre d'écoulement (20) est amovible.

5. Analyseur selon la revendication 1, caractérisé par le fait que la chambre d'écoulement (20) est constituée d'une matière choisie dans le groupe comprenant le quartz le verre et la silice fondue.

6. Analyseur selon la revendication 2, caractérisé par le fait que l'ensemble de lentilles (82) est placé tout contre la chambre d'écoulement (20) et de façon que de trajet de la lumière d'excitation qui émane de lui traverse cette chambre (20) et coupe à angle droit le courant de liquide dans l'orifice (54), le plan focal de cette lumière étant situé sensiblement sur l'axe longitudinal de l'orifice (54).

7. Analyseur selon la revendication 6, caractérisé par le fait que l'ensemble de lentilles (82) comporte un arrangement de lentilles donnant une ouverture numérique élevée et une longue distance de travail de la face du système de lentilles (82) audit plan focal.

8. Analyseur selon la revendication 7, caractérisé par le fait que l'ouverture numérique de l'ensemble de lentilles (82) est supérieure à 11,0 et la distance de travail supérieure à 0.25 mm.

9. Analyseur selon la revendication 1, caractérisé par le fait que la source lumineuse (70) envoie une lumière incohérente à l'ensemble de lentilles (82).

10. Analyseur selon la revendication 9, caractérisé par le fait que la source lumineuse (70) est une lampe à arc à vapeur de mercure.

11. Analyseur selon la revendication 10, caractérisé par le fait qu'il comporte en outre un moyen (74) de filtrage de la lumière émise par la source (70) de façon que les longueurs d'onde d'une bande chromatique choisie soient transmises par lui pour aller à l'ensemble de lentilles (82), cette bande chromatique choisie étant la lumière d'excitation des particules capables d'entrer en fluorescence (33).

12. Analyseur selon la revendication 11, caractérisé par le fait que le moyen (74) de filtrage de la lumire peut être enlevé de l'analyseur de façon que des moyens de filtrage interchangeables puissant être utilisés pour la lumière d'excitation et la lumière de réémission dans différentes régions du spectre chromatique.

13. Analyseur selon la revendication 1, caractérisé par le fait que la source lumineuse (70) est un laser.

14. Analyseur selon la revendication 1, caractérisé par le fait que le système d'électrodes (56, 58) comporte une électrode positive (58) et une électrode négative (56) placées de part et d'autre de l'orifice (54) pour produire un potentiel à travers lui.

15. Analyseur selon la revendication 14, caractérisé par le fait qu'il comporte en outre une électrode détectrice (60) placée en dehors du champ de courant électrique des électrodes positive (58) et négative (56) pour détecter les changements des signaux électriques à travers l'orifice (54) quand les particules (33) passent dans celui-ci.

16. Analyseur selon la revendication 1, caractérisé par le fait qu'il comporte en outre des moyens de production d'information relatifs à la détection simultanée des signaux électriques et d'émission de lumière de chaque particule (33) qui passe dans l'orifice.

**Patentansprüche**

1. Gerät zur Bestimmung des Volumens und der Fluoreszenz- Charakteristik von in einem sich bewegenden Flüssigkeitsstrom fließenden Teilchen (33) des Typs mit einer transparenten Flüssigkeits-Durchflußkammer (20) einschließlich eines Durchgangswegs mit einer Einlaßöffnung (48) und einer Auslaßöffnung (50) und einem Durchlaß (54) zwischen diesen, wobei dieser Durchlaß kleinere Querschnittsabmessungen als die Einlaß- und Auslaß- Öffnungen besitzt, Mittel (29, 35) zur Herbeiführung eines Zweikomponenten-Stroms des Flüssigkeitsstroms in die Einlaßöffnung (48) hinein und durch den Durchlaß (54) hindurch, wobei dieser Strom eine teilchenfreie, zur Leitung des elektrischen Stroms bafähigte äußere Hüllflüssigkeit (36) und eine coaxial dazu angeordnete innere Flüssigkeit (34) aufweist, die Teilchen (33) enthält, welche befähigt sind, bei Anregung in einem vorgewählten Teil des Farbspektrums zu fluoreszieren, Elektrodenmittel (56, 58) zur Erzeugung eines elektrischen Stroms in dem genannten Flüssigkeitsstrom und zum Erfühlen der elektrischen Veränderungen, wenn Teilchen (33) durch den Durchlaß (54) hindurchfließen, wobei diese elektrischen Veränderungen in Beziehung stehen mit Änderungen der Volumina der Teilchen (33), sowie einer Anregungs-Lichtquelle (70), dadurch gekennzeichnet, daß:
der Durchgangsweg von der Einlaßöffnung (48) bzw. der Auslaßöffnung (50) her in Richtung auf den Durchlaß (54) hin verjüngt ist, eine Linseneinrichtung (82) mittels Auflicht-Beleuchtung das Erreger-Licht (79 a, b) senkrecht zur Richtung des Flüssigkeitsstroms durch den Durchlaß (54) auf die Teilchen richtet und die von den den Durchlaß passierenden Teilchen (33) emittierte Fluoreszenz (80 a, b) empfängt und Mittel (14) zur gleichzeitigen Analyse der elektrischen Änderung und der von jedem Teilchen (33) bei seinem Durchgang durch den Durchlaß (54) herrührenden Fluoreszenz zur gleichzeitigen Bestimmung von Teilchen-Volumen und Fluoreszenz-Charakteristik desselben vorgesehen sind.

2. Analysengerät nach Anspruch 1, dadurch gekennzeichnet, daß die Durchflußkammer (20) zylindrisch ausgebildet ist und der Durchlaß (54) konzentrisch in ihr angeordnet ist.

3. Analysengerät nach Anspruch 2, dadurch gekennzeichnet, daß die Durchlaß (54) kreisförmigen Querschnitt aufweist.

4. Analysengerät nach Anspruch 1, dadurch gekennzeichnet, daß die Durchflußkammer (20) von dem Analysengerät abnehmbar ist.

5. Analysengerät nach Anspruch 1, dadurch gekennzeichnet, daß die Durchflußkammer (20) aus einem aus der aus Quarz, Glas oder Geschmolzenem Siliciumdioxid bestehenden Gruppe ausgewählten Material gefertigt ist.

6. Analysengerät nach Anspruch 2, dadurch gekennzeichnet, daß die Linseneinrichtung (82) unmittelbar benachbart der Durchflußkammer (20) angeordnet ist, so daß der Strahl des Erregerlichts aus der Linseneinrichtung (82) durch die Durchflußkammer (20) hindurchgeht und den fließenden Flüssigkeitsstrom in dem Durchlaß (54) senkrecht schneidet, wobei die Brennebene des Erregerlichts im wesentlichen in der Längsachse der Öffnung (54) liegt.

7. Analysengerät nach Anspruch 6, dadurch gekennzeichnet, daß die Linseneinrichtung (82) eine Linsenanordnung enthält, die eine hohe numerische Apertur und einen großen Arbeitsabstand von der Fläche der Linseneinrichtung (82) zu der Brennebene liefert.

8. Analysengerät nach Anspruch 7, dadurch gekennzeichnet, daß die numerische Apertur der Linseneinrichtung (82) größer als 1,0 und der Arbeitsabstand größer als 0,25 mm ist.

9. Analysengerät nach Anspruch 1, dadurch gekennzeichnet, daß die Lichtquelle (70) der Linseneinrichtung (82) inkohärentes Licht liefert.

10. Analysengerät nach Anspruch 9, dadurch gekennzeichnet, daß die Lichtquelle (70) eine Quecksilber-Bogenlampe ist.

11. Analysengerät nach Anspruch 10, dadurch gekennzeichnet, daß es weiterhin Mittel (74) zum Filtern des Lichtes von der Lichtquelle (70) umfaßt, so daß Wellenlängen eines vorgewählten Farbbereichs zum Durchgang zu der Linseneinrichtung (82) hindurchgelassen werden, wobei der vorgewählte Farbbereich das Anregungslicht für die fluoreszenzfähigen Teilchen (33) ist.

12. Analysengerät nach Anspruch 11, dadurch gekennzeichnet, daß das Lichtfilter-Mittel (74) von dem Analysengerät trennbar ist, so daß auswechselbare Filter-Mittel für Erregerlicht und rückgestrahltes Licht in verschiedenen Bereichen des Farbspektrums verwendet werden können.

13. Analysengerät nach Anspruch 1, dadurch gekennzeichnet, daß die Lichtquelle (70) ein Laser ist.

14. Analysengerät nach Anspruch 1, dadurch gekennzeichnet, daß die Elektrodenmittel (56, 58) eine positive (58) und eine negative Elektrode (56) umfassen, die jeweils an entgegengesetzten Seiten des Durchlasses (54) angeordnet sind, um quer durch diesen hindurch ein Potential zu erzeugen.

15. Analysengerät nach Anspruch 14, dadurch gekennzeichnet, daß es weiterhin eine Fühlelektrode (60) enthält, die außerhalb des Feldes des elektrischen Stroms der positiven (58) und negativen (56) Elektrode angeordnet ist, um elektrische Singaländerungen quer über den Durchlaß (54) zu erfühlen, wenn die Teilchen (33) durch diesen hindurchgehen.

16. Analysengerät nach Anspruch 1, dadurch gekennzeichnet, daß es weiterhin Mittel zur Erzeugung von Information enthält, die den gleichzeitigen Nachweis von ekektrischer Signalen und Lichtemissionssignalen jedes durch den Durchlaß (54) hindurchgehenden Teilchens (33) betreffen.

## FIG.1

10

12

Analysis
Console
14

2

2

21

22    15

16

18

## FIG.4

20

52    51

50

48

54

1

FIG.2

FIG.3

FIG.5

0 068 404

FIG.6